# EUROPÄISCHE PATENTANMELDUNG

(11) **EP 1 759 991 A1**
(43) Veröffentlichungstag der Anmeldung: **07.03.2007**
(21) Anmeldenummer: 05018937.2
(22) Anmeldetag: 31.08.2005
(51) Int. Cl.: B64D 11/06

(54) **Anordnung zum Sitzen und Liegen**

(71) Anmelder: Lufthansa Technik AG, 22335 Hamburg (DE)
(72) Erfinder: Merensky, Harald, 22359 Hamburg (DE)
(74) Vertreter: Glawe, Delfs, Moll

(57) **Zusammenfassung**

Die insbesondere für den Passagierbereich von Flugzeugen ausgelegte Anordnung zum Sitzen und zum Liegen kann in einen Sitzzustand und einen Liegezustand gebracht werden. Die Anordnung weist im Sitzzustand eine Sitzfläche (2) und eine Lehne (3) auf. Im Liegezustand bietet die Anordnung eine Liegefläche (22). Die Anordnung zeichnet sich dadurch aus, dass sie eine Sitzeinrichtung (1) und eine davon getrennte Liegeeinrichtung (10) umfasst und dass die Liegeeinrichtung (10) im Sitzzustand neben der Sitzeinrichtung (1) und im Liegezustand über der Sitzeinrichtung (1) angeordnet ist. Mit Hilfe des Verfahrens wird zwischen dem Sitzzustand und dem Liegezustand der Anordnung gewechselt. Indem die Sitzeinrichtung (1) und die Liegeeinrichtung (10) voneinander getrennte Einrichtungen sind, wird sowohl ein besserer Sitzkomfort als auch ein besserer Liegekomfort geboten.

## Beschreibung

Die Erfindung betrifft eine insbesondere für den Passagierbereich von Flugzeugen bestimmte Anordnung zum Sitzen und zum Liegen. Die Anordnung ist in einen Sitzzustand und einen Liegezustand bringbar. Im Sitzzustand umfasst die Anordnung eine Sitzfläche und eine Lehne, im Liegezustand weist sie eine Liegefläche auf.

Vor allem bei Langstreckenflügen wird es von Passagieren als angenehm empfunden, wenn sie an ihrem Platz nach eigener Wahl entweder sitzen oder liegen können. Bekannt ist es, Flugzeuge zu diesem Zweck mit kombinierten Sitz- und Liegeeinrichtungen auszustatten. Im Sitzzustand kann der Passagier auf der Sitzfläche sitzen und sich mit dem Rücken an der Lehne anlehnen. Um die kombinierte Einrichtung vom Sitzzustand in den Liegezustand zu bringen, wird die Lehne in die Ebene der Sitzfläche geschwenkt, so dass eine annähernd ebene Liegefläche entsteht.

Ein Nachteil solcher kombinierter Sitz- und Liegeeinrichtungen besteht darin, dass sowohl im Sitzzustand als auch im Liegezustand Kompromisse hingenommen werden müssen. Damit im Liegezustand eine annähernd ebene Fläche entsteht, können die Sitzfläche und die Lehne nicht so konturiert werden, wie es für ein bequemes Sitzen optimal wäre. Im Liegezustand ist die Liegefläche nicht breiter als die Breite des Sitzes und damit für ein komfortables Liegen zu schmal. Zudem schränken die auch im Liegezustand nicht vollständig verschwindenden Übergänge zwischen den im Sitzzustand die Sitzfläche und die Lehne bildenden Teilen den Liegekomfort ein.

Der Erfindung liegt die Aufgabe zugrunde, eine Anordnung gemäß dem Oberbegriff des Anspruchs 1 vorzustellen, die sowohl einen verbesserten Sitzkomfort als auch einen verbesserten Liegekomfort bietet. Die Aufgabe wird gelöst durch die Merkmale des Anspruchs 1. Vorteilhafte Ausführungsformen finden sich in den Unteransprüchen.

Die Anordnung zeichnet sich erfindungsgemäß dadurch aus, dass sie eine Sitzeinrichtung und eine davon getrennte Liegeeinrichtung umfasst und dass die Liegeeinrichtung im Sitzzustand neben der Sitzeinrichtung und im Liegezustand über der Sitzeinrichtung angeordnet ist. Zum Wechseln zwischen dem Sitzzustand und dem Liegezustand wird die Neigung der Lehne der Sitzeinrichtung durch Schwenken der Lehne gegenüber der Sitzfläche geändert und die Liegeeinrichtung von der Position seitlich neben der Sitzeinrichtung in der Position über der Sitzeinrichtung bewegt. Die Angaben oben, unten, seitlich sind auf den Boden der Kabine bezogen.

Indem die Anordnung eine von der Sitzeinrichtung getrennte Liegeeinrichtung umfasst, kann jede der beiden Einrichtungen für den jeweiligen Einsatzzweck optimal angepasst sein. Die Sitzeinrichtung kann für optimalen Sitzkomfort konturiert sein. Die Liegeeinrichtung kann vollkommen eben sein und zugleich so breit ausgeführt sein, dass ein bequemes Liegen möglich ist. Indem die Liegeeinrichtung im Liegezustand über der Sitzeinrichtung und im Sitzzustand neben der Sitzeinrichtung angeordnet ist, wird der für den Passagier zur Verfügung stehende Platz gut ausgenutzt. In der First Class kommerzieller Linienflugzeuge liegt heute ein gängiger Sitzabstand bei 86" (2,18 m), die einem First Class Passagier zur Verfügung stehende Sitzbreite einschließlich neben dem Sitz angeordneter Stauräume (gemessen auf der Höhe des Kabinenbodens) beträgt üblicherweise etwa 38" (97 cm). Im Stand der Technik ist auf dieser Grundfläche ein sogenannter Sleepersitz angeordnet, der sich zu einem flachen Bett (mit den genannten Nachteilen) verstellen läßt.

Die Erfindung ermöglicht es, auf der gleichen Grundfläche einen solchen Sitz zu kombinieren mit einer separaten Liegeeinrichtung, die diese Grundfläche zu wesentlichen Teilen als Liegefläche für den Passagier nutzt. Es sind lediglich Trenneinrichtungen und Sichtblenden zwischen den benachbarten Sitzen vorzusehen, so dass bei einem Sitzabstand von 86" (2,18 m) sich beispielsweise eine Liegefläche mit einer Länge von 78" (1,98 m) ergeben kann. Die Sitzbreiten üblicher First Class Sitze (einschließlich Armlehnen) liegen in der Regel deutlich unter 30". Dies bedeutet, dass neben dem Sitz ein erheblicher Teil der zur Verfügung stehenden Grundfläche (Breite 38") als Stauraum für die Liegeeinrichtung im Sitzzustand genutzt werden kann. Insbesondere ist es möglich, dass die Liegeeinrichtung im Sitzzustand hochkant neben dem Sitz angeordnet ist. Vorteilhafterweise ist die Liegeeinrichtung in Längsrichtung faltbar. Wenn die Liegeeinrichtung im Liegezustand eine Breite von 90 cm aufweist, besitzt sie in Längsrichtung gefaltet und neben dem Sitz im Sitzzustand hochkant senkrecht angeordnet eine Höhe von 45 cm. Sie kann daher innerhalb einer Konsole verstaut werden, deren Oberseite oder Deckel als Ablagefläche neben dem Sitz für den Passagier dient. Vorzugsweise sind die beiden Hälften der Liegeeinrichtung um eine in der Mitte der Liegeeinrichtung in Längsrichtung ausgerichtete Achse gegeneinander klappbar.

Im Rahmen der Erfindung ist es auch denkbar, dass die Liegeeinrichtung in Querrichtung faltbar ist und im Sitzzustand hochkant hinter dem Sitz angeordnet wird. In diesem Fall kann die Liegeeinrichtung im Sitzzustand Teil einer Abschirmwand gegenüber dem folgenden Sitz sein.

Um dem Passagier ein bequemes Einsteigen in die Liegeeinrichtung zu ermöglichen, ist die Liegefläche im Liegezustand vorzugsweise um nicht mehr als 100 cm, weiter vorzugsweise um nicht mehr als 80 cm, weiter vorzugsweise um nicht mehr als 60 cm über dem Kabinenboden angeordnet.

Für einen guten Sitzkomfort erstreckt sich die Sitzeinrichtung im Sitzzustand in eine deutlich größere Höhe über dem Kabinenboden als die Höhe, in der die Liegefläche vorteilhafterweise angeordnet ist. Da die Liegeeinrichtung im Liegezustand über der Sitzeinrichtung angeordnet ist, muss die Sitzeinrichtung beim Übergang vom Sitzzustand in den Liegezustand so verändert werden, dass ihr höchster Punkt unterhalb des Niveaus der Liegefläche angeordnet ist.

Möglich ist es, die Sitzeinrichtung zu diesem Zweck in ihrer Gesamtheit in der Höhe zu verfahren. Es kann jedoch die Höhe der Sitzfläche beibehalten werden, wenn die Lehne so gegenüber der Sitzfläche geschwenkt wird, dass sie um nicht mehr als 20 cm, vorzugsweise um nicht mehr als 10 cm, weiter vorzugsweise um nicht mehr als 5 cm über das Niveau der Sitzfläche hinausragt. Vom Begriff Lehne ist im Rahmen der Erfindung auch eine eventuell vorhandene Kopfstütze umfasst. Das Niveau der Sitzfläche wird durch den Punkt der Sitzfläche bestimmt, der die größte Höhe über dem Kabinenboden hat.

Falls die Sitzeinrichtung eine oder mehrere Armlehnen umfasst, so sind diese im Sitzzustand für ein bequemes Sitzen deutlich oberhalb der Sitzfläche angeordnet. Um die Gesamthöhe der Sitzeinrichtung im Liegezustand so klein wie möglich zu halten, können die Armlehnen beim Wechsel zwischen dem Sitzzustand und dem Liegezustand so in der Höhe verfahren werden, dass sie im Liegezustand um nicht mehr als 10 cm, weiter vorzugsweise um nicht mehr als 5 cm über das Niveau der Sitzfläche hinausragen.

Da der Platz an Bord von Flugzeugen begrenzt ist, ist es erstrebenswert, die Liegeeinrichtung im Sitzzustand möglichst raumsparend unterzubringen. Zu diesem Zweck kann die Liegeeinrichtung bei einem Wechsel zwischen dem Liegezustand und dem Sitzzustand um eine in Längsrichtung der Liegeeinrichtung ausgerichtete Achse geschwenkt werden, so dass die Liegeeinrichtung im Sitzzustand senkrecht angeordnet ist.

Weiter kann beim Wechsel zwischen dem Liegezustand und dem Sitzzustand ein Teil der Liegeeinrichtung gegenüber einem anderen Teil der Liegeeinrichtung entlang einer in Längsrichtung der Liegeeinrichtung ausgerichteten Achse geklappt werden, so dass die beiden Teile der Liegeeinrichtung im Sitzzustand Rücken an Rücken zueinander angeordnet sind. Die auf diese Weise zusammengeklappte Liegeeinrichtung nimmt im Sitzzustand nur eine geringe Höhe ein.

Beim Wechsel zwischen den Zuständen kann die Liegeeinrichtung zudem in der Höhe verfahren werden, so dass die Liegeeinrichtung im Sitzzustand nicht über die Höhe der Armlehne der Sitzeinrichtung hinausragt. Dadurch wird es möglich, im Sitzzustand eine Ablagefläche oberhalb der Liegeeinrichtung anzuordnen, die für den auf der Sitzeinrichtung sitzenden Passagier bequem zugänglich ist. Vorzugsweise ist die Ablagefläche zwischen 10 cm und 50 cm oberhalb des Niveaus der Sitzfläche angeordnet.

Damit der Passgier bei verschiedenen Einbauzuständen der erfindungsgemäßen Anordnung bequem liegen kann, kann die Neigung der Liegeeinrichtung in Längsrichtung verstellbar sein, etwa indem sie um eine in Querrichtung der Liegefläche ausgerichtete Achse schwenkbar ausgestaltet ist. Der Verstellbereich beträgt vorteilhafterweise mindestens 3°. Dadurch kann die Liegeeinrichtung so an den Einbauzustand angepasst werden, dass die auf den Passagier einwirkende Kraft senkrecht zur Längsrichtung der Liegefläche wirkt. Dem Passagier wird das Gefühl vermittelt, auf einer waagerechten Fläche zu liegen. Vorteilhafterweise ist die in Querrichtung der Liegefläche ausgerichtete Achse in der Nähe des Kopfendes der Liegefläche angeordnet. Der Kopf des Passagiers bleibt dann in einer konstanten Position relativ zum Flugzeug, auch wenn die Neigung der Liegeeinrichtung geändert wird.

Für einen besseren optischen Eindruck kann die Liegeeinrichtung im Sitzzustand innerhalb eines Gehäuses angeordnet sein. Das Gehäuse kann die oberhalb der Liegeeinrichtung angeordnete Ablagefläche sowie seitliche Wände umfassen.

Ohne Mehrbedarf an Platz gegenüber herkömmlichen kombinierten Sitz- und Liegeeinrichtungen kann die im Liegezustand ebene Liegefläche eine Länge von mindestens 190 cm und eine Breite von mindestens 90 cm haben. Für ein bequemes Liegen kann die Liegeeinrichtung eine Matratze umfassen, die mindestens 5 cm, vorzugsweise mindestens 8 cm dick ist. Die Ablagefläche oberhalb der Liegeeinrichtung ist dann so breit, so dass auch größere Gegenstände abgelegt werden können. Um das Klappen der beiden Teile der Liegeeinrichtung gegeneinander zu ermöglichen, kann die Matratze in Längsrichtung geteilt sein. Die Seiten der beiden Matratzenteile, an dem sie im Liegezustand aneinanderstoßen, sollten so gestaltet sein, dass der Spalt zwischen beiden Teilen möglichst klein ist.

Für größeren Bedienkomfort kann die Anordnung eine elektrische Antriebseinrichtung umfassen, mit Hilfe derer die einzelnen Schritte bei einem Wechsel zwischen Liegezustand und Sitzzustand automatisch vollzogen werden.

Im Liegezustand können am Kopfende der Liegeeinrichtung weiterhin eine Leselampe sowie eine weitere Ablagefläche angeordnet sein. Die Anordnung kann ein Fach umfassen, in dem Bettwäsche und ähnliches untergebracht werden können. Dieses Fach ist vorzugsweise hinter der Sitzeinrichtung angeordnet. Außerdem kann die Anordnung einen Monitor umfassen, der vorzugsweise so angeordnet ist, dass er sowohl aus der Sitzposition als auch aus der Liegeposition gut eingesehen werden kann. Um die Anordnung herum können zum Schutz der Privatsphäre des Passagiers Sichtschutzwände angeordnet sein.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine Seitenansicht der erfindungsgemäßen Anordnung im Sitzzustand;
- Fig. 2:: eine Seitenansicht der erfindungsgemäßen Anordnung im Liegezustand;
- Fig. 3:: die erfindungsgemäße Anordnung im Sitzzustand;
- Fig. 4:: die erfindungsgemäße Anordnung in einem Zwischenzustand zwischen Sitzzustand und Liegezustand;
- Fig. 5:: die erfindungsgemäße Anordnung in Seitenansicht mit einer geneigten Liegeeinrichtung;
- Fig. 6:: Schematisch in einer Teilschnittansicht von oben eine erfindungsgemäße Anordnung;
- Fig. 7:: Schematisch zwei nebeneinander angeordnete erfindungsgemäße Anordnungen;
- Fig. 8:: Die Gruppierung von erfindungsgemäßen Anordnungen als First-Class Bestuhlung auf dem Oberdeck einer A 380.

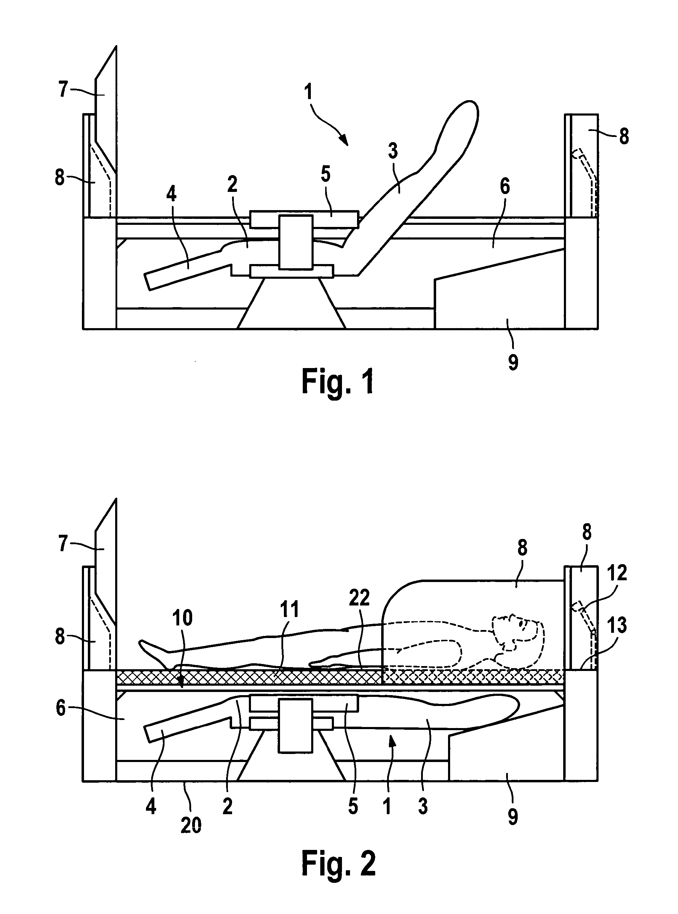

Die Anordnung umfasst in Fig. 1 eine Sitzeinrichtung in Form eines üblichen Flugzeugsitzes 1. Der Sitz 1 umfasst eine Sitzfläche 2, eine Kopfstütze umfassende Lehne 3, eine Fußstütze 4 sowie eine Armlehne 5. Die Lehne 3 und die Fußstütze 4 sind gegenüber der Sitzfläche 2 abgewinkelt, der Sitz 1 ist auf eine bequeme Sitzposition eingestellt. Eine in Figur 1 nicht sichtbare Liegeeinrichtung ist in einem Gehäuse 6 neben dem Sitz 1 verstaut.

Vor dem Sitz 1 in Blickrichtung des Passagiers ist ein Monitor 7 angeordnet. Vor und hinter dem Sitz befinden sich Sichtschutzwände 8. Hinter dem Sitz auf dem Kabinenboden 20 ist ein Fach 9 zum Unterbringen von Bettzeug und ähnlichem gezeigt.

Mit dem auf eine bequeme Sitzposition eingestellten Sitz 1 und der im Gehäuse 6 verstauten Liegeeinrichtung befindet sich die Anordnung im Sitzzustand.

In Fig. 2 ist die Anordnung im Liegezustand. Die Lehne 3 und die Armlehnen 5 des Sitzes 1 sind abgesenkt, so dass der höchste Punkt der Lehne 3 und der höchste Punkt der Armlehne 5 nur leicht über den höchsten Punkt der Sitzfläche 2 hinausragen. Oberhalb des Sitzes 1 ist die zuvor im Gehäuse 6 befindliche Liegeeinrichtung 10 mit einer Matratze 11 ausgebreitet. Die Liege 10 bietet eine vollkommen ebene Liegefläche 22 und ermöglicht ein bequemes Liegen. Am Kopfende der Liege 10 befinden sich eine Leselampe 12 und ein Ablagefach 13. Dem Schutz der Privatsphäre des Passagiers dienen um die Liege 10 herum angebrachte Sichtschutzwände 8. Auch aus der Liegeposition heraus hat der Passagier einen guten Blick auf den Monitor 7.

Dadurch dass der Sitz 1 so eingestellt ist, dass seine höchsten Punkte nur leicht über dem Niveau der Sitzfläche 2 liegen, hat die Liege 10 eine so geringe Höhe über dem Kabinenboden 20, dass sie leicht vom Passagier bestiegen werden kann.

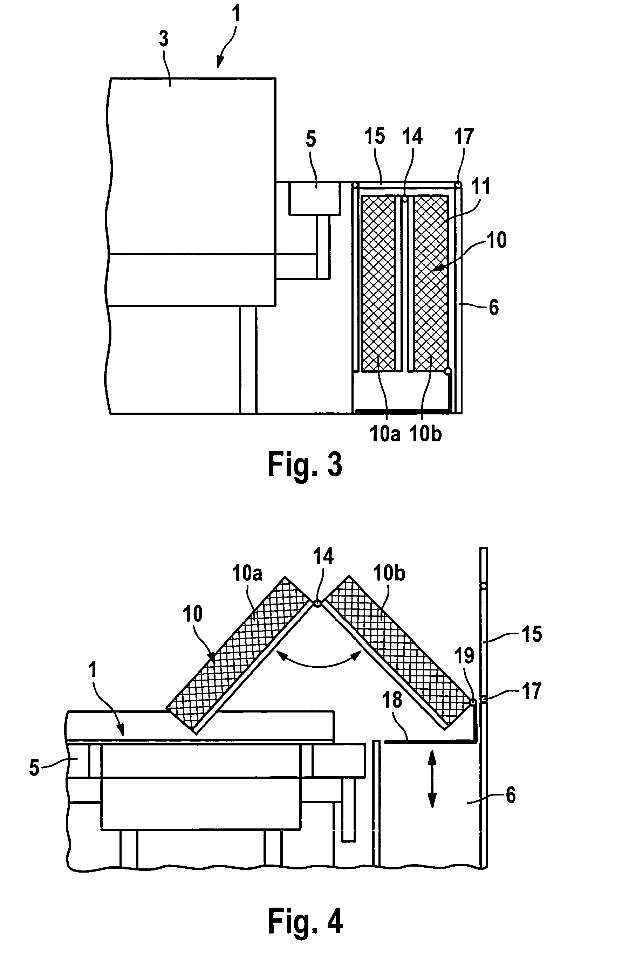

In Fig. 3 ist die Anordnung wieder im Sitzzustand dargestellt. Der Sitz 1 ist aufgerichtet und die Liege 10 ist in neben dem Sitz im Gehäuse 6 zusammengefaltet. Die Liege 10 ist um eine in Längsrichtung der Liege ausgerichtete Achse 14 umgeklappt, so dass zwei Hälften 10a, 10b der Liege 10 Rücken an Rücken aneinander liegen. Die Matratze 11 ist zweigeteilt, so dass mit jedem Teil der Liege 10 jeweils ein Teil der Matratze 11 verbunden ist.

Das Gehäuse 6, in dem die Liege 10 untergebracht ist, besteht aus zwei Seitenwänden und einer oberen Abdeckung, die als Ablagefläche 15 dient. Die Ablagefläche 15 ist auf der gleichen Höhe angeordnet wie die Armlehne 5 des Sitzes 1, so dass der auf dem Sitz 1 sitzende Passagier die Ablagefläche 15 bequem erreichen kann.

Um die Anordnung vom Sitzzustand in den Liegezustand zu bringen, werden zunächst die Lehne 3 und die Armlehnen 5 des Sitzes 1 abgesenkt, so dass der Sitz 1 den in Figur 4 gezeigten Zustand einnimmt. Die oben auf dem Gehäuse 6 befindliche Ablagefläche 15 wird um eine in Längsrichtung der Liege 10 ausgerichtete Achse 17 nach oben geschwenkt, so dass das Gehäuse 6 von oben frei zugänglich ist. Die Liege 10 wird aus dem Gehäuse 6 heraus nach oben gefahren, bis der untere Abschnitt der Aufnahme 18 der Liege 10 sich auf einer Höhe mit der Oberseite des Sitzes 1 befindet. Durch gleichzeitiges Entfalten der beiden Hälften 10a, 10b der Liege 10 um die Achse 14 und Schwenken der Liege 10 um die Achse 19 wird die Liege 10 über dem Sitz 1 ausgebreitet und bildet die ebene Liegefläche. In Figur 4 ist die Liege 10 in einem Zwischenzustand während des Ausfaltens über dem Sitz 1 gezeigt.

Durch die umgekehrte Abfolge von Verfahrensschritten wird die Anordnung vom Liegezustand in den Sitzzustand gebracht.

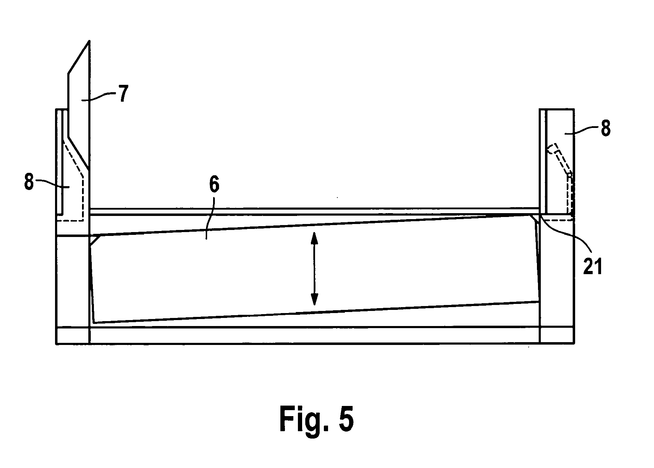

Gemäß Fig. 5 kann die Neigung der Liegeeinrichtung verstellt werden. Im Liegezustand kann die Liege 10 selbst, im Sitzzustand die oberhalb der Liegeeinrichtung angeordnete Ablagefläche 15 so eingestellt werden, dass sie senkrecht zur auf den Passagier wirkenden Kraft steht. Die Achse 21, um die die Liegeeinrichtung geschwenkt wird, ist in der Nähe des Kopfendes der Liege 10 angeordnet.

In dem der Sitz 1 und die Liege 10 voneinander getrennte Einrichtungen sind, können beide auf die speziellen Anforderungen des Liegens bzw. Sitzens abgestimmt sein. Sowohl beim Liegen als auch beim Sitzen wird dem Passagier ein größerer Komfort geboten als bei einer kombinierten Sitz- und Liegeeinrichtung. Weiterhin werden die Entwicklungskosten im Vergleich zu einer kombinierten Sitz- und Liegeeinrichtung reduziert, da auf einen Standardsitz zurückgegriffen werden kann. Ein weiterer Kostenvorteil ergibt sich daraus, dass beim Nachrüsten eines Flugzeugs mit der erfindungsgemäßen Anordnung der existierende Sitz häufig weiterverwendet werden kann.

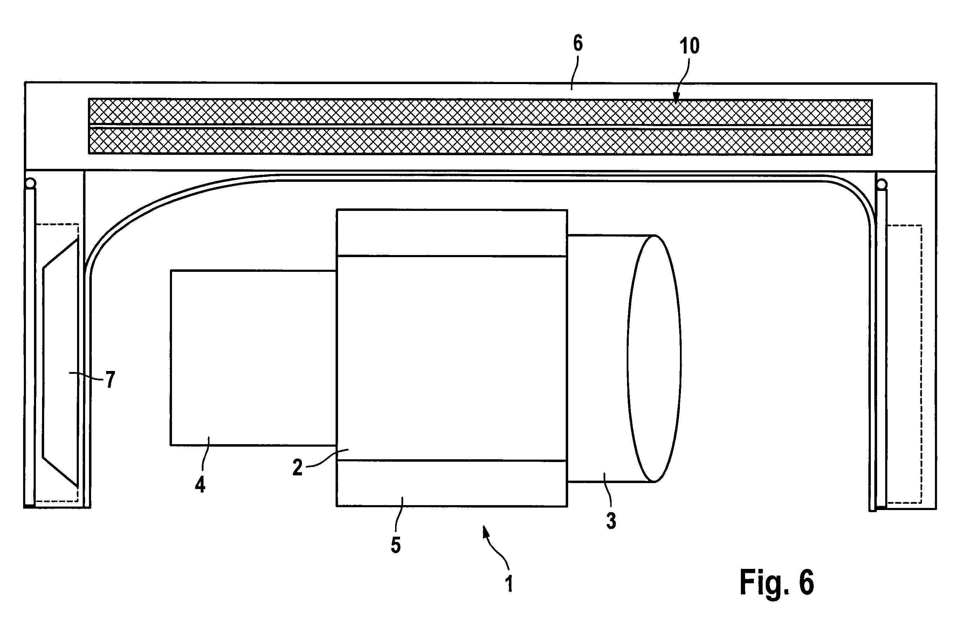

Fig. 6 zeigt in einer Ansicht von oben den Sitz 1 mit der Sitzfläche 2, der Lehne 3, der Fußstütze 4 und den Armlehnen 5. Neben dem Sitz ist eine Konsole bzw. ein Gehäuse 6 angeordnet, in dem die Liegeeinrichtung 10 längs gefaltet und hochkant gestellt aufbewahrt ist.

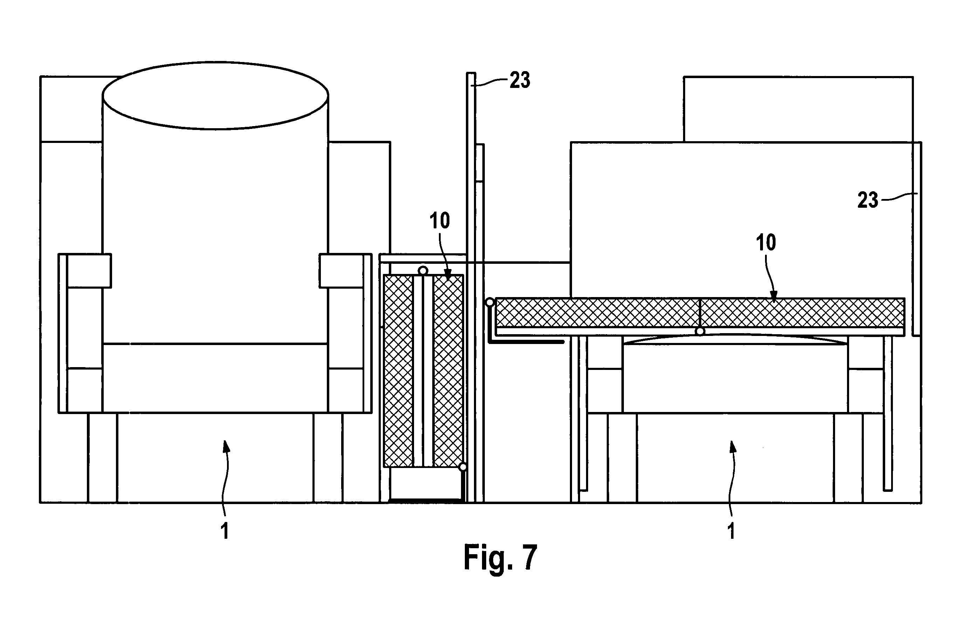

Fig. 7 zeigt zwei nebeneinander angeordnete erfindungsgemäße Anordnungen. Die linke Anordnung befindet sich im Sitzzustand, die Liege 10 ist neben dem Sitz 1 aufgefaltet. Die rechte Anordnung befindet sich im Liegezustand, der Sitz 1 befindet sich flach unterhalb der Liegeeinrichtung 10. Es ist erkennbar, dass die Liegeeinrichtung 10 im Wesentlichen die gesamte Breite der dem Passagier zur Verfügung stehenden Grundfläche einnimmt, so dass ein komfortables Liegen möglich ist. Die Breite der Liegeeinrichtung 10 ist erheblich größer als die der Sitzfläche 2 des Sitzes 1. Die Bezugsziffer 23 bezeichnet Sichtblenden zwischen den Sitzen.

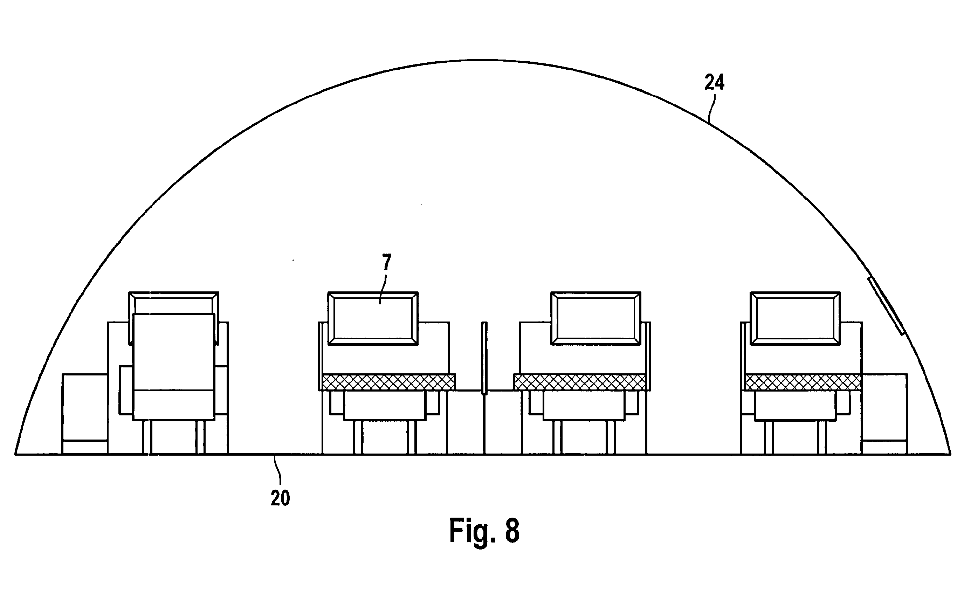

Fig. 8 zeigt schematisch die Gruppierung erfindungsgemäßer Anordnungen auf dem Oberdeck eines Airbus A 380. Man erkennt, dass vier erfindungsgemäße Anordnungen zu einer in der First Class üblichen Sitzkonfiguration 1-2-1 zusammengestellt werden können. Der Platzbedarf entspricht neben einer First Class Konfiguration des Standes der Technik, für den Passagier bietet die erfindungsgemäße Anordnung jedoch einen deutlich höheren Liegekomfort. In Figur 8 bezeichnet die Bezugsziffer 23 den Kabinenboden, die Bezugsziffer 24 die Innenseite der Flugzeugaußenhaut.

## Patentansprüche

1. Anordnung zum Sitzen und zum Liegen, insbesondere für den Passagierbereich von Flugzeugen, die in einen Sitzzustand und einen Liegezustand bringbar ist, wobei die Anordnung im Sitzzustand eine Sitzfläche (2) und eine Lehne (3) aufweist und im Liegezustand eine Liegefläche (22) aufweist, **dadurch gekennzeichnet, dass** sie eine Sitzeinrichtung (1) und eine davon getrennte Liegeeinrichtung (10) umfasst und dass die Liegeeinrichtung (10) im Sitzzustand neben der Sitzeinrichtung (1) und im Liegezustand über der Sitzeinrichtung (1) angeordnet ist.

2. Anordnung nach Anspruch 1, **dadurch gekennzeichnet, dass** die Liegefläche (22) im Liegezustand um nicht mehr als 100 cm, vorzugsweise um nicht mehr als 80 cm, weiter vorzugsweise um nicht mehr als 60 cm über dem Kabinenboden (20) angeordnet ist.

3. Anordnung nach Anspruch 1 oder 2, **dadurch gekennzeichnet, dass** die Lehne (3) der Sitzeinrichtung (1) im Liegezustand um nicht mehr als 20 cm, vorzugsweise nicht mehr als 10 cm, weiter vorzugsweise nicht mehr als 5 cm über das Niveau der Sitzfläche (2) hinausragt.

4. Anordnung nach einem der Ansprüche 1 bis 3, **dadurch gekennzeichnet, dass** die Sitzeinrichtung (1) eine Armlehne (5) umfasst und dass die Armlehne (5) im Liegezustand um nicht mehr als 10 cm, vorzugsweise um nicht mehr als 5 cm über das Niveau der Sitzfläche (2) hinausragt.

5. Anordnung nach einem der Ansprüche 1 bis 4, **dadurch gekennzeichnet, dass** die Liegeeinrichtung (1) im Sitzzustand senkrecht angeordnet ist.

6. Anordnung nach einem der Ansprüche 1 bis 5, **dadurch gekennzeichnet, dass** die Liegeeinrichtung in Längsrichtung faltbar ist.

7. Anordnung nach Anspruch 6, **dadurch gekennzeichnet, dass** im Sitzzustand ein Teil (10a) der Liegeeinrichtung (10) gegenüber einem anderen Teil (10b) der Liegeeinrichtung (10) um eine in Längsrichtung der Liegeeinrichtung ausgerichtete Achse (14) umgeklappt ist.

8. Anordnung nach einem der Ansprüche 1 bis 7, **dadurch gekennzeichnet, dass** die Liegefläche (22) im Liegezustand eben ist und eine Länge von mindestens 190 cm und eine Breite von mindestens 70 cm vorzugsweise mindestens 80 cm, weiter vorzugsweise mindestens 90 cm aufweist.

9. Anordnung nach einem der Ansprüche 1 bis 8, **dadurch gekennzeichnet, dass** die Liegeeinrichtung (10) eine Matratze (11) umfasst und dass die Matratze (11) mindestens 5 cm, vorzugsweise mindestens 8 cm dick ist.

10. Anordnung nach Anspruch 9, **dadurch gekennzeichnet, dass** die Matratze (11) in Längsrichtung geteilt ist.

11. Anordnung nach einem der Ansprüche 1 bis 10, **dadurch gekennzeichnet, dass** sie im Sitzzustand eine Ablagefläche (15) oberhalb der Liegeeinrichtung (10) aufweist und dass die Ablagefläche zwischen 10 cm und 50 cm oberhalb des Niveaus der Sitzfläche (2) angeordnet ist.

12. Anordnung nach einem der Ansprüche 1 bis 11, **dadurch gekennzeichnet, dass** die Neigung der Liegeeinrichtung (10) in Längsrichtung verstellbar ist.

13. Anordnung nach einem der Ansprüche 1 bis 12, **dadurch gekennzeichnet, dass** die Liegeeinrichtung (10) im Sitzzustand innerhalb eines Gehäuses (6) angeordnet ist.

14. Anordnung nach einem der Ansprüche 1 bis 13, **dadurch gekennzeichnet, dass** sie eine elektrische Antriebseinrichtung für den Wechsel zwischen dem Sitzzustand und dem Liegezustand umfasst.
